**Europäisches Patentamt**

**European Patent Office**

**Office européen des brevets**

(19)

(11) Publication number : **0 051 875 B2**

(12) # NEW EUROPEAN PATENT SPECIFICATION

(45) Date of publication of the new patent specification : **26.02.92 Bulletin 92/09**

(51) Int. Cl.⁵ : **C08L 25/16,** C08L 69/00, C08L 25/12

(21) Application number : **81109605.6**

(22) Date of filing : **10.11.81**

(54) Thermoplastic resin composition having toughness and high thermal deformation resistance.

(30) Priority : **11.11.80 JP 159133/80**

(43) Date of publication of application : **19.05.82 Bulletin 82/20**

(45) Publication of the grant of the patent : **20.03.85 Bulletin 85/12**

(45) Mention of the opposition decision : **26.02.92 Bulletin 92/09**

(84) Designated Contracting States : **BE CH DE FR GB IT LI NL SE**

(56) References cited :
EP-A- 0 042 572
DE-B- 1 810 993
GB-A- 1 253 226
US-A- 4 294 946

(73) Proprietor : **KANEGAFUCHI KAGAKU KOGYO KABUSHIKI KAISHA 2-4 Nakanoshima 3-chome Kita-ku Osaka-shi Osaka-fu (JP)**

(72) Inventor : **Muramatsu, Eiichi 310, 3rd-ebisu-mansion 360-2 Ebisu Shikama-ku, Himeji-shi Hyogo-ken (JP)**
Inventor : **Mathumoto, Sigemi 329, Nagao, Amida-cho, Takasago-shi Hyogo-ken (JP)**
Inventor : **Nagoshi, Fumiya 9-36, 9-chome, Nishimaiko Tarumi-ku Kobe-shi, Hyogo-ken (JP)**

(74) Representative : **Vossius & Partner Siebertstrasse 4 P.O. Box 86 07 67 W-8000 München 86 (DE)**

EP 0 051 875 B2

## Description

The present invention relates to a thermoplastic resin composition of an α-methylstyrene-rich copolymer, vinyl graft copolymer, and polycarbonate, said composition being superior in thermal deformation resistance, impact resistance, and flowability in hot molding.

ABS resins(acrylonitrile-butadiene-styrene graft copolymers) have been in general use as an inexpensive material which is superior in mechanical properties and flowability in hot molding. However, ABS resin is not used in areas where thermal deformation resistance higher than 90°C is required. In addition, it is not used for making articles which require high impact resistance, toughness, and thermal deformation resistance.

On the other hand, polycarbonates have been used as a material which is superior in impact resistance, toughness, and thermal deformation resistance. However, they have the drawbacks that the flowability in hot molding is poor, the price is high, and thick articles molded from them are brittle. Efforts have been made to overcome these drawbacks. For instance, blending of the ABS resin into polycarbonate is shown in Japanese Patent Publication No. 15225/1963, the blending of styrene and methacrylate into a styrene-butadiene copolymer and the blending of a copolymer grafted with styrene, methyl methacrylate, and acrylonitrile into a styrene-butadiene copolymer in Japanese Patent Publication No. 71/1964, the blending of polystyrene in Japanese Patent Publication No. 6295/1968, and the blending of methyl methacrylate resin in Japanese Patent Publication No. 48500/1971. The compositions based on these known processes, which are intended mainly to achieve improved flowability of the polycarbonate in hot molding, do not necessarily possess preferable properties over a broad blending range. They lack either or both mechanical strength (particularly impact strength and toughness) and thermal deformation resistance. Because of their unsatisfactory results, they are used only in limited areas.

There is disclosed in Japanese Patent Publication No. 504/1976 a process for blending a polycarbonate with a vinyl thermoplastic resin which is a mixture of a vinyl graft copolymer and a vinyl linear polymer consisting mainly of α-methylstyrene. The composition according to this known process has comparatively good thermal deformation resistance and both high impact resistance and toughness. Nevertheless, it is necessary to increase the blend ratio of polycarbonate for specific application areas where a high level of thermal deformation resistance is required. This leads to high production costs. In addition, it has been pointed out that such a blend composition suffers from the disadvantage that if the content of α-methylstyrene in the vinyl linear polymer consisting mainly of α-methylstyrene is increased above the limit defined in the claim, the composition does no longer show improved thermal resistance and mechanical properties but decomposes during molding.

Also known are methods for increasing the content of α-methylstyrene in the α-methylstyrene-containing copolymer. Japanese Patent Publication No. 18194/1960 discloses blending of ABS resin and a copolymer consisting of α-methylstyrene and acrylonitrile. Japanese Patent Publication No. 33661/1970 discloses a process in which 75 to 90 wt% α-methylstyrene and 25 to 10 wt% of acrylonitrile are copolymerized in the first step, and α-methylstyrene which remained unreacted is reacted with a monomer mixture of styrene and acrylonitrile in the second stage. The process according to Japanese patent publication No. 18194/1960 is disadvantageous in that the polymerization conversion decreases rapidly when the quantity of α-methylstyrene exceeds 70 wt% in the monomer mixture in the polymerization system. The process according to Japanese patent publication No. 33661/1970 also has the drawback that the polymerization conversion is low even when α-methylstyrene is used in the maximum quantity of 90 wt% and it is difficult to increase above 82 wt% the quantity of α-methylstyrene in the polymer in the first stage. Moreover, the more α-methylstyrene is used in the first stage, the more styrene and acrylonitrile are required for copolymerization in the second stage. Thus, the quantity of α-methylstyrene in the polymer is about 75 wt% at the maximum. This limits the possibility of improving the thermal deformation resistance. Incidentally, there is a poly-α-methylstyrene consisting of α-methylstyrene alone, but it has found practical use only as a processing aid because of its too low decomposition temperature.

GB-A-1 253 225 discloses a thermoplastic blend of polycarbonate, ABS graft polymer and a copolymer of 10 to 40% by weight of acrylonitrile or acrylic acid ester and 90 to 60% by weight of monovinyl aromatic hydrocarbon, at least 50% by weight of which is α-methylstyrene. No specific method for producing the copolymer is disclosed in GB-A-1 253 226 nor is a specifically high α-methystyrene content of the copolymer mentioned.

In US-A-4,294,946 corresponding to JP-A-55 078 007 and 55 078 043 a process for preparing a thermoplastic resin by emulsion polymerization of an α-methylstyrene compound and an unsaturated nitril in a weight proportion of 65:35 to 80:20 in the presence of a radical initiator is disclosed, which is characterized in that the whole amount of the α-methylstyrene compound and 10 to 99% by weight of the unsaturated nitrile on the basis of its total amount are subjected to polymerization (1st stage polymerization), the remainder of the unsaturated nitrile is added thereto, and the resultant mixture is subjected to further polymerization (2nd stage polymerization).

It is the object of the present invention to provide a thermoplastic resin composition comprising a copolymer (A) consisting of α-methylstyrene and acrylonitrile, a vinyl graft copolymer (B) and an aromatic polycarbonate (C) having outstanding characteristics such as high thermal deformation resistance, high impact strength, toughness, absence of thermal decomposition in molding, and moderate price, even through the polycarbonate is blended in low amounts.

This object is achieved according to the invention by a thermoplastic resin composition having toughness and high thermal deformation resistance which comprises a copolymer (A) consisting of 65 to 90 parts by weight of α-methylstyrene and 35 to 5 parts by weight of acrylonitrile and 0 to 30 parts by weight of a copolymerizable vinyl monomer, a vinyl graft copolymer (B), which is obtainable by grafting at least one methacrylic alkyl ester, vinyl aromatic compound, or vinyl cyanide compound onto a conjugated diene rubber, and an aromatic polycarbonate (C), which is characterized in that more than 30 parts by weight of the particles of copolymer (A) consist of a component having an α-methylstyrene-content of more than 82% by weight, the copolymer (A) being obtainable by charging more than 70 parts by weight of α-methylstyrene and less than 5 parts by weight of acrylonitrile and/or a copolymerizable vinyl monomer into the reactor all at once, emulsifying the reactants, and adding gradually less than 35 parts by weight of acrylonitrile and/or a copolymerizable vinyl monomer, while performing an emulsion polymerization in such a manner that the weight ratio of α-methylstyrene to monomers other than α-methylstyrene in the reaction system is at least 90/10 until the resultant copolymer reaches 50 parts by weight. The thermoplastic resin composition obtained by blending said α-methylstyrene-rich polymer (A), the vinyl graft copolymer, and the polycarbonate (C) has high thermal deformation resistance, high impact resistance, and toughness all at once.

What is important in the present invention is the composition of the α-methylstyrene-rich copolymer. This copolymer consists of 65 to 90 parts (by weight hereunder) of α-methylstyrene, 35 to 5 parts of acrylonitrile and 0 to 30 parts of copolymerizable vinyl monomer. More than 30 parts by weight of the particles consist of a component having an α-methylstyrene content of 82% more preferably more than 10 parts by weight of the particles consisting of a component bearing an α-methylstyrene content of more than 86%. In the conventional process, it was impossible to produce a copolymer in which more than 30 parts weight of the particles consist of a component having an α-methylstyrene content of more than 82%, and the thermal deformation temperature (under 18.6 kg load) was limited to 115 to 117°C. The copolymer (A) used in the composition of this invention has a thermal decomposition temperature higher than 117°C.

The aforesaid copolymer (A) is produced in the following manner. First, the α-methylstyrene monomer and less than 5 parts by weight of acrylonitrile is charged and emulsified in the reactor. Then acrylonitrile is added dropwise continuously little by little at a rate such that the weight ratio of α-methylstyrene monomer to acrylonitrile monomer is kept at 90/10, preferably 95/5, until the resulting polymer reaches 50 parts. By keeping α-methylstyrene in great excess, the desired copolymer (A) can be obtained. The α-methylstyrene is charged in quantities from 70 parts to 90 parts. If the quantity is under 70 parts, satisfactory improvement over the conventional products cannot be attained; and if the quantity is over 90 parts, the composition of this invention decreases in mechanical strength. The acrylonitrile monomer is added dropwise continuously in quantities from 5 parts to 35 parts. If the quantity is under 5 parts, the conversion of polymerization is low; and if the quantity is over 35 parts, the resulting composition is easily discoloured during processing and has deteriorated physical properties. The α-methylstyrene monomer to be charged at first may contain less than 10% parts by weight of a copolymerizable vinyl monomer (for example a methacrylic lower-alkyl ester and an acrylic lower-alkyl ester. The term lower alkyl as used in this description designates alkyl groups (straight or branched) with 1 to 6, preferably 1 to 4, and most preferably 1 to 3 carbon atoms).

The third component next to α-methylstyrene and acrylonitrile which is a copolymerizable vinyl monomer is limited to less than 30 parts by weight in order to avoid its adverse effect on heat resistance and impact resistance.

The vinyl graft copolymer (B) used for the composition of this invention is obtained by graft polymerization of at least one methacrylic lower alkyl ester, monovinylaromatic compound or vinyl cyanide compound respectively by methyl methacrylate, styrene, and acrylonitrile onto a conjugated diene rubber. The said graft copolymer (B) is composed of 35 to 80% of diene rubber (conjugated diene olefin rubber) and 65 to 20% of at least one methacrylic lower alkyl ester, vinyl aromatic compound or vinyl cyanide compound. The diene olefin rubber in the graft copolymer (B) includes polybutadiene, polyisoprene, and butadiene-styrene copolymers, but is not limited to them. The vinyl aromatic compounds other than styrene include α-methylstyrene, chlorostyrene, and t-butylstyrene. The vinyl cyanide compounds other than acrylonitrile include methacrylonitrile. The methacrylic alkyl esters other than methyl methacrylate include ethyl methacrylate and butyl methacrylate. In addition to the monomer to be grafted, any copolymerizable vinyl monomer may be used in an amount less than 5% based on the graft copolymer (B).

The aforesaid copolymer (A) is obtained by emulsion polymerisation. The graft copolymer (B) are obtained not only by emulsion polymerization but also by other processes. The emulsion polymerization can be accomplished in the usual manner. That is, the aforesaid monomer mixture is reacted in an aqueous medium in the presence of a free-radical initiator. Such free-radical initiators include water-soluble and oil-soluble peroxide compounds such as potassium persulfate, ammonium persulfate, cumene hydroperoxide, p-menthane hydroperoxide, azobis(2,-dimethylvaleronitrile), and t-butyl peroxypivalate. In addition, such adjuvants as polymerization accelerators, polymerization controllers, and emulsifiers which are commonly used in emulsion polymerization may be used in the above-mentioned polymerization.

The polycarbonate (C) used for the composition of this invention is an aromatic polycarbonate having aromatic groups on the main chain. The polycarbonate can be produced by either ester interchange processes or by the phosgene process. Such polycarbonate is preferably derived from 2,2-(4,4'-dioxydiphenyl)propane, and may be blended with a modified polycarbonate, co-carbonate, and polycarbonate of different molecular weight.

The composition of this invention comprising the copolymer (A), graft copolymer (B), and polycarbonate (C) varies in thermal deformation resistance, impact resistance, toughness, and flowability in hot molding depending on the composition and polymerization degree as well as their blending ratio. The preferable blending ratio is 30 to 60% of copolymer (A), 10 to 30% of graft copolymer (B), and 50 to 20% of the polycarbonate. If the copolymer (A) is present in amounts of less than 30%, the resulting composition is improved only a little in thermal deformation resistance and is poor in flowability; if the copolymer (A) is/more than 60%, the resulting composition is poor in impact resistance and toughness. If the graft copolymer (B) is less than 10%, the resulting composition is poor in impact resistance and toughness; and if the graft copolymer (B) is more than 30%, the resulting composition is poor in thermal deformation resistance and flowability. If the polycarbonate (C) is less than 20%, the resulting composition is poor in impact resistance, toughness, and thermal deformation resistance; and if the polycarbonate (C) is more than 50%, the resulting composition is poor in flowability and high in production costs.

Blending, pelletization, and molding of the composition of this invention may be accomplished by known processes. For instance, a mixture of the latexes of the copolymer (A) and graft copolymer (B) may be subjected to a salting-out reaction, followed by dehydration and drying. The resulting powder may be blended with powder or pellets of polycarbonate (C) and then mixed under heating using a roll mill, screw mixer, Banbury mixer, or kneader, followed by molding.

The polycarbonate (C) may be blended with the copolymer (A) or the graft copolymer (B) in the form of latex or at the time of mixing. During blending, stabilizers, pigments, lubricants, fillers, etc. may be added as required. The additives and salting-out agents should be free from divalent metals in order to avoid decomposition and degradation during the blending of the polycarbonate.

The following examples illustrate the practice of this invention, but are not intended to limit its scope.

## Working examples and reference examples

### (1) Preparation of the copolymer (A1 to A7)

Into a reactor equipped with a stirrer were charged the following substances.

| | |
|---|---|
| Water | 250 parts |
| Sodium oleate | 3 parts |
| Sodium formaldehyde sulfoxylate | 0.4 part |
| Ferrous sulfate | 0.0025 part |
| Disodium ethylenediaminetetraacetate | 0.01 part |

After removal of oxygen, the contents were heated to 60°C with agitation under a nitrogen stream and then the monomers (I) shown in Table 1 were charged in turn. After emulsification was completed (with agitation), monomers II as shown in Table 1 were added dropwise continuously over 6 hours. Agitation was continued for a further 1 hour at 60°C to complete polymerization. During polymerization, the latex was sampled from the reactor to analyze the composition and determine the polymerization conversion. On completion of polymerization, the latex was coagulated with iron-free aluminum sulfate, followed by washing with water and drying. The resulting polymer was pelletized and subjected to measurement of thermal deformation resistance. The results are shown in Table 1.

TABLE 1

| Copolymer A | Working Examples | | | | Reference Examples | | |
|---|---|---|---|---|---|---|---|
| | A1 | A2 | A3 | A4 | A5 | A6 | A7 |
| Monomer (I) $\alpha$-MS (parts) | 80 | 70 | 70 | 75 | 0 | 0 | 70 |
| AN (parts) | 0 | 0 | 5 | 0 | 0 | 0 | 20 |
| t-DM (parts) | 0.2 | 0.2 | 0.2 | 0.2 | 0 | 0 | 0.2 |
| Monomer (II) AN (parts) | 20 | 30 | 22 | 22 | 20 | 30 | 8.5 |
| $\alpha$-MS (parts) | 0 | 0 | 3 | 0 | 80 | 70 | 1.5 |
| MMA (parts) | 0 | 0 | 0 | 3 | 0 | 0 | 0 |
| CHPO (parts) | 0.5 | 0.5 | 0.5 | 0.5 | 0.5 | 0.5 | 0.5 |
| t-DM (parts) | 0.2 | 0.2 | 0.2 | 0.2 | 0.4 | 0.4 | 0.2 |
| Content of $\alpha$-methylstyrene at 50% conversion of polymerization (%)* | 83 | 82 | 82 | 82 | 70 | 69 | 69 |
| Final conversion of polymerization (%) | 96 | 97 | 96 | 97 | 88 | 96 | 96 |
| Thermal deformation resistance (°C)** | 119 | 117 | 118 | 118 | 109 | 108 | 109 |

Remarks:    $\alpha$-MS=$\alpha$-methylstyrene
               AN=acrylonitrile
               MMA=methyl methacrylate
               t-DM=t-dodecylmercaptan
               CHPO=cumene hydroperoxide

Note:
  * The content of $\alpha$-methylstyrene in the copolymer which was calculated by elementary analysis of the copolymer.
  ** Load 18.6 kg in accordance with ASTM D648—56

As Table 1 indicates, the copolymer obtained according to the polymerization method of this invention is superior in thermal deformation resistance to the copolymer obtained by the known polymerization method. The copolymers of $\alpha$-methylstyrene and acrylonitrile (identified as A5 to A7 in reference examples) obtained by the conventional technology are limited in thermal deformation temperature because they consist mainly of an alternating copolymer of $\alpha$-methylstyrene and acrylonitrile. In contrast to this, the copolymers A of this invention (identified as A1 to A4 in the working examples) exhibit high thermal deformation temperature which could not been obtained in the past because they contain polymer chains containing more than 82% $\alpha$-methylstyrene.

(2) Preparation of the graft copolymer (B)

Into a reactor equipped with a stirrer were charged the following substances.

| Water | 250 parts |
|---|---|
| Sodium formaldehyde sulfoxylate | 0.2 part |
| Ferrous sulfate | 0.0025 part |
| Disodium ethylenediaminetetraacetate | 0.01 part |
| Polybutadiene (solids) | 60 parts |

After removal of oxygen, the contents were heated to 60°C with agitation under a nitrogen stream and then the monomers (III) shown in Table 2 were added dropwise continuosly over 5 hours. Agitation was continued for a further 1 hour at 60°C to complete polymerization.

TABLE 2

| Monomers (III) | MS | AS |
|---|---|---|
| AN (parts) | 0 | 12 |
| ST (parts) | 12 | 28 |
| MMA (parts) | 28 | 0 |
| CHPO (parts) | 0.3 | 0.3 |

Remarks: ST=styrene
AN=acrylonitrile
MMA=methyl methacrylate
CHPO=cumene hydroperoxide

(3) Preparation of thermoplastic resin compositions

Each of the copolymers (A) and graft copolymers (B) prepared in the above steps (1) and (2) was mixed in a specific ratio in the form of a latex. After addition of an antioxidant, the latex mixture was coagulated with iron-free aluminum sulfate, followed by washing, filtration, and drying. The resulting powder was blended with component (C), i.e. with a polycarbonate (Panlite® K-1400W, K-1300W, and L-1250 made by Teijin Kasei) and the mixture was pelletized for measurement of its physical properties. The results are shown in Table 3.

As Table 3 indicates, the compositions of this invention (Working examples 1 to 9) are superior in thermal deformation resistance to the conventional copolymer (Reference examples 1 to 9). They also have high impact resistance at room temperature and low temperatures and high toughness. In addition, they are more flowable and less expensive than a polycarbonate itself.

Tensile strength was measured in accordance with ASTM D-636; Izod impact strength: ASTM D-256 (3.175 mm thick) with notch at 30°C; and thermal deformation temperature: ASTM 648-56 (load 18.6 kg). Falling weight impact strength is expressed to multiply the weight of the dart by the height from which a 4-kg weight is dropped to break half the samples ( 100x150x3 mm) and is tested at room temperature. The flowability was measured on a "Koka type" flow tester with 100 kg load at 260°C.

TABLE 3 (1)

Unit: parts

| Items | Working examples 1 | 2 | 3 | 4 | 5 | 6 | 7 | 8 | 9 |
|---|---|---|---|---|---|---|---|---|---|
| Copolymer (A) A-1 | 42 | | | | 42 | 42 | 42 | 50 | 35 |
| A-2 | | 42 | | | | | | | |
| A-3 | | | 42 | | | | | | |
| A-4 | | | | 42 | | | | | |
| A-5 | | | | | | | | | |
| A-6 | | | | | | | | | |
| A-7 | | | | | | | | | |
| Copolymer (B) MS | | | | | 18 | | | 20 | 25 |
| AS | 18 | 18 | 18 | 18 | | 18 | 18 | | |
| Polycarbonate (C) Panlite® K-1400W | | | | | | 40 | | | |
| Panlite® K-1300W | 40 | 40 | 40 | 40 | 40 | | | 30 | 40 |
| Panlite® K-1250W | | | | | | | 40 | | |
| Physical properties Tensile strength (MPa) | 52,9 | 53,9 | 54,0 | 52,9 | 54,1 | 54,2 | 54,0 | 52,2 | 47,8 |
| Izod impact strength (N-cm/cm²) | 198 | 247 | 259 | 277 | 263 | 351 | 113 | 108 | 385 |
| Falling weight impact strength (N-m) | 87 | 93 | 90 | 88 | 93 | 102 | 89 | 76 | 107 |
| Thermal deformation temperature (°C) | 123 | 120 | 120 | 120 | 121 | 121 | 119 | 117 | 115 |
| Flowability ($10^{-2}$ cc/sec) | 4.2 | 6.2 | 6.0 | 5.9 | 3.6 | 3.8 | 6.8 | 4.8 | 3.0 |

TABLE 3 (2)

Unit: parts

| | Reference examples | | | | | | | | |
|---|---|---|---|---|---|---|---|---|---|
| | 1 | 2 | 3 | 4 | 5 | 6 | 7 | 8 | 9 |
| Copolymer (A) A-1 | | | | 63 | 21 | | 70 | 70 | |
| A-2 | | | | | | | | | |
| A-3 | | | | | | | | | |
| A-4 | | | | | | | | | |
| A-5 | 42 | | | | | | | | |
| A-6 | | 42 | | | | | | | |
| A-7 | | | 42 | | | | | | |
| Copolymer (B) MS | | | | | | | | | |
| AS | 18 | 18 | 18 | 27 | 9 | 60 | | 30 | |
| Polycarbonate (C) Panlite® K-1400W | | | | | | | | 30 | |
| Panlite® K-1300W | 40 | 40 | 40 | 10 | 70 | 40 | 30 | | 100 |
| Panlite® K-1250W | | | | | | | | | |
| Physical properties Tensile strength (MPa) | 51,1 | 54,9 | 54,3 | 49,1 | 61,3 | 28,6 | 68,1 | 51,7 | 68,6 |
| Izod impact strength (N-cm/cm²) | 198 | 208 | 221 | 109 | 547 | 128 | 28 | 148 | 345 |
| Falling weight impact strength (N-m) | 86 | 90 | 91 | 40 | 113 | 34 | 15 | 39 | — |
| Thermal deformation temperature (°C) | 114 | 112 | 113 | 113 | 121 | 99 | 122 | 114 | 135 |
| Flowability ($10^{-2}$ cc/sec) | 4.6 | 6.5 | 6.2 | 4.1 | 1.5 | 3.0 | 18.1 | 4.9 | <0.2 |

## Claims

1. A thermoplastic resin composition having toughness and high thermal deformation resistance which comprises a copolymer (A) consisting of 65 to 90 parts by weight of $\alpha$-methylstyrene and 35 to 5 parts by weight of acrylonitrile and 0 to 30 parts by weight of a copolymerizable vinyl monomer, a vinyl graft copolymer (B) which is obtainable by grafting at least one methacrylic alkyl ester, vinyl aromatic compound, or vinyl cyanide compound onto a conjugated diene rubber, and an aromatic polycarbonate (C), characterized in that more than 30 parts by weight of the particles of copolymer (A) consist of a component having an $\alpha$-methylstyrene content of more than 82% by weight, the copolymer (A) being obtainable by charging more than 70 parts by weight of $\alpha$-methylstyrene and less than 5 parts by weight of acrylonitrile and/or a copolymerizable vinyl monomer into the reactor all at once, emulsifying the reactants, and adding gradually less than 35 parts by weight of acrylonitrile and/or a copolymerizable vinyl monomer, while performing an emulsion polymerization in such a manner that the weight ratio of $\alpha$-methylstyrene to monomers other than $\alpha$-methylstyrene in the reaction system is at least 90/10 until the resultant copolymer reaches 50 parts by weight.

2. A composition as claimed in Claim 1 which comprises 30 to 60 wt% of the $\alpha$-methylstyrene-rich

copolymer (A), 10 to 30 wt% of the graft copolymer (B), and 50 to 20 wt% of the polycarbonate (C).

**Patentansprüche**

1. Thermoplastische kunstharzzusammensetzung, die Zähigkeit und eine hohe Widerstandsfähigkeit gegen thermische Deformation aufweist, umfassend ein Copolymerisat (A), das aus 65 bis 90 Gewichtsteilen $\alpha$-Methylstyrol und 35 bis 5 Gewichtsteilen Acrylnitril und 0 bis 30 Gewichtsteilen eines copolymerisierbaren Vinylmonomeren besteht, ein Vinyl-Pfropfcopolymerisat (B), das erhalten werden kann durch Aufpfropfen von mindestens einem Methacrylsäurealkylester, einer vinylaromatischen Verbindung oder einer Vinylcyanidverbindung auf einen konjugierten Dienkautschuk, und ein aromatisches Polycarbonat (C), dadurch gekennzeichnet, daß mehr als 30 Gewichtsteile der Teilchen des Copolymerisates (A) aus einer Komponente bestehen, die einen $\alpha$-Methylstyrolgehalt von mehr als 82 Gewichtsprozent aufweist, das Copolymer (A) erhältlich ist durch Einspeisen von mehr als 70 Gewichtsteilen $\alpha$-Methylstyrol und weniger als 5 Gewichtsteilen Acrylnitril und/oder einem copolymerisierbaren Vinylmonomer auf einmal in den Reaktor, Emulgieren der Reaktionspartner und durch allmähliche Zugabe von weniger als 35 Gewichtsteilen Acrylnitril und/oder einem copolymerisierbaren Vinylmonomer, wobei eine Emulsionspolymerisation derart durchgeführt wird, daß das Gewichtsverhältnis von $\alpha$-Methylstyrol zu den anderen Monomeren als $\alpha$-Methylstyrol im Reaktionssystem mindestens 90/10 beträgt, bis das entstandene Copolymerisat 50 Gewichtsteile erreicht.

2. Zusammensetzung nach Anspruch 1, umfassend 30 bis 60 Gewichtsprozent des an $\alpha$-Methylstyrol reichen Copolymerisates (A), 10 bis 30 Gewichtsprozent Pfropfcopolymerisat (B) und 50 bis 20 Gewichtsprozent Polycarbonat (C).

**Revendications**

1. Composition de résine thermoplastique ayant de la ténacité et une résistance élevée à la déformation thermique, qui comprend un copolymère (A) constitué de 65 à 90 parties en poids d'$\alpha$-méthylstyrène et de 35 à 5 parties en poids d'acrylonitrile et de 0 à 30 parties en poids d'un monomère vinylique copolymérisable, un copolymère greffé vinylique (B), que l'on peut obtenir par greffage d'au moins un ester alkylique méthacrylique, un composé aromatique vinylique ou un composé de cyanure vinylique sur un caoutchouc diène conjugué, et un polycarbonate aromatique (C), caractérisée en ce que plus de 30 parties en poids des particules de copolymère (A) sont constituées d'un composant ayant une teneur en $\alpha$-méthylstyrène de plus de 82 % en poids, le copolymère (A) pouvant être obtenu en chargeant plus de 70 parties en poids d'$\alpha$-méthylstyrène et moins de 5 parties en poids d'acrylonitrile et/ou d'un monomère vinylique copolymérisable dans le réacteur en une seule fois, en émulsifiant les réactifs, et en ajoutant progressivement moins de 35 parties en poids d'acrylonitrile et/ou d'un monomère vinylique copolymérisable, tout en réalisant une polymérisation en émulsion d'une manière telle que le rapport en poids de l'$\alpha$-méthylstyrène aux monomères autres que l'$\alpha$-méthylstyrène dans le système réactionnel soit d'au moins 90/10 jusqu'à ce que le copolymère résultant atteigne 50 parties en poids.

2. Composition suivant la revendication 1, caractérisée en ce qu'elle comprend de 30 à 60 % en poids de copolymère riche en $\alpha$-méthylstyrène (A), 10 à 30 % en poids de copolymère greffé (B) et 50 à 20 % en poids de polycarbonate (C).